# EUROPÄISCHE PATENTANMELDUNG

(11) **EP 1 424 498 A1**
(43) Veröffentlichungstag der Anmeldung: **02.06.2004**
(21) Anmeldenummer: 03026089.7
(22) Anmeldetag: 13.11.2003
(51) Int. Cl.: F16B 5/02

(54) **Schwingungsdämpfende lösbare Rast-/Schraub-Verbindungsanordnung**

(30) Priorität: 26.11.2002 DE 20218300 U
(71) Anmelder: Schwarz Verbindungs-Systeme GmbH, 75382 Althengstett (DE)
(72) Erfinder: Schwarz, Helmut, 71263 Weil der Stadt (DE); Homner, Bernhard, 75365 Calw (DE)
(74) Vertreter: Blutke, Klaus Wilhelm, Dipl.-Ing.

(57) **Zusammenfassung**

Schwingungsdämpfende Verbindungsanordnung zum lösbaren Verbinden zweier mit aufeinander ausgerichteten Öffnungen (HMP1), HMP2) versehener Bauteile (MP1, MP2).
Diese Verbindungsanordnung umfaßt einen an sich bekannten Bolzenverbinder, bestehend aus einem Halte-Drehbolzen (1) mit Außengewinde (1W), welcher mit in einem Innenkonus (2K) sitzenden feder(4)beaufschlagten Gewindemutter-Segmenten (3-1,3-2) verbunden werden kann.

Die Gewindemutter-Segmente (3-1, 3-2) sind mit ihrem Außenmantel (3-1M, 3-2M) auf dem Innenkonus (2K) in Richtung der Gehäuseöffnung (2H) oder entgegengesetzt dazu verschiebbar.Der Halte-Drehbolzen (1) kann zwischen die verschiebbaren Gewindemutter-Segmente (3-1, 3-2) gegen die Feder(4)kraft hineingedrückt werden, wobei seine Gewindegänge (1W) in die der Gewindemutter-Segmente (3-1, 3-2) einrasten. Durch Drehung des Halte-Drehbolzens (1) kann dieser mit dem Gewinde der Gewindemutter-Segmente (3-1, 3-2) verschraubt werden.
Dieser an sich bekannte Bolzenverbinder ist in einem Schwingungsdämpferring mit einer speziellen Ausgestaltung zur Aufnahme des zweiten Bauteils angeordnet.

## Beschreibung

Die Erfindung bezieht sich auf eine schwingungsdämpfende lösbare Rast/Schraub-Verbindungsanordnung für zwei Bauteile.

Es gibt eine Vielzahl von lösbaren Verbindungsanordnungen mit unterschiedlichen Verbindungsarten (z.B. Steck-, Rast-, Dreh-, Gewinde- Verbindungen), die vielfach auch schwingungsdämpfend sind.

Beim Anbringen großflächiger Bauteile (z.B.von Innenwand-Verkleidungen ) sind oftmals mehrere Verbindungsanordnungen pro Bauteil erforderlich, um einen sicheren Halt zu garantieren.

Die Montage eines solchen Bauteils, insbesondere mit mehreren Verbindungsanordnungen, erfordert viel Geschick und Geduld, besonders wenn nur ein Monteur zur Verfügung steht. Dieser muß zunächst mit einer Hand das Bauteil in der richtigen Position halten und dann nacheinander mit der anderen Hand die einzelnen Verbindungen herstellen. Ein ungewolltes Verschieben des Bauteiles erfordert einen neuen Montageversuch.

Zur Vermeidung dieses Nachteils ist es Aufgabe der Erfindung, eine schwingungsdämpfende lösbare Verbindungsanordnung vorzusehen, welche eine einfache lose Vorfixierung der Verbindungselemente gestattet.
Dadurch soll es z.B. ermöglicht werden, das Bauteil durch leichtes Andrücken (an den Montage-Rahmen) in eine "lose" Halte-Verbindung zu bringen, in welcher sich das Bauteil nicht mehr lösen kann.

Dank einer solchen "losen" Halte-Verbindung kann sich der Monteur nunmehr beidhändig um ein weiteres Ausrichten des Bauteils und um ein "Festziehen" der einzelnen Verbindungsanordnungen kümmern.

Diese Aufgabe der Erfindung wird durch die im kennzeichnenden Teil des Anspruches 1 oder des Anspruches genannten Merkmale gelöst.

Vorteilhafte Weiterbildungen der Erfindung sind in den Unteransprüchen gekennzeichnet.

Ein Ausführungsbeispiel der Erfindung ist in den Zeichnungen dargestellt und wird im folgenden näher beschrieben.

Es zeigen:

### FIG.1

eine Schnittdarstellung einer erfindungsgemäßen schwingungsdämpfenden lösbaren Rast/Schraub-Verbindungsanordnung für zwei Bauteile;

### FIG.2

eine perspektische Darstellung eines Rast/Schraub-Verbinders für einen gedachten Gewindebolzen entsprechend dem Stand der Technik, bestehend aus einem hohlzylinderförmigen Gehäuse mit zwei Gewindemuttersegmenten;

### FIG. 3

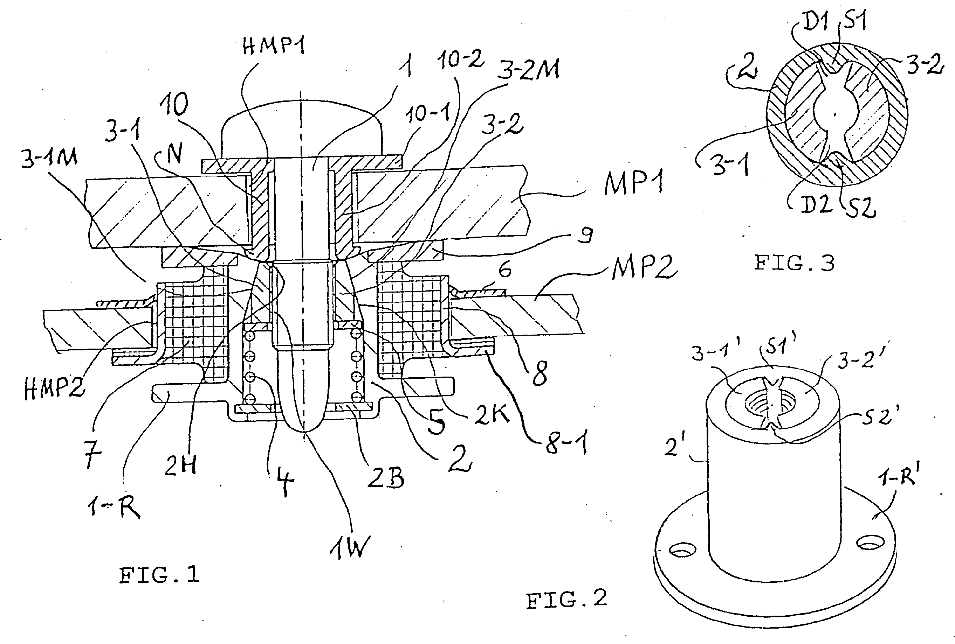

Darstellung eines Horizontalschnitts des Rast/Schraub-Verbinders gemäß FIG. 2.

### FIG.1 zeigt

eine Schnittdarstellung der erfindungsgemäßen schwingungsdämpfenden lösbaren Rast/Schraub-Verbindungsanordnung für zwei Bauteile MP1 und MP2 mit aufeinander ausgerichteten fluchtenden Öffnungen HMP1 und HMP2. Sie umfaßt einen auf der Seite des ersten Bauteils MP1 in die Öffnungen einführbaren Halte-Drehbolzen 1 und einem mit dem zweiten Bauteil MP2 verbundenen Bolzenverbinder.
Der Haltedrehbolzen und der Bolzenverbinder entsprechen für sich gesehen dem Stand der Technik (EP 03 52 542 ): In der EP 03 52 542 ist eine Verbindungsanordnung beschrieben, bei der ein Gewindebolzen mit in einem Innenkonus -114 in FIG. 1 von EP 03 52 542 -sitzenden feder(149 in FIG. 1 von EP 03 52 542 ) beaufschlagten Segmenten -121 in FIG. 1 von EP 03 52 542 -mit Innengewinde verbunden werden kann.
Der Halte-Drehbolzen 1 hat ein Außengewinde 1W. Der Bolzenverbinder umfaßt ein Gehäuse 2 , welches einen sich zu seiner - der Aufnahme des Halte-Drehbolzen-Endes dienenden-Öffnung 2H hin verjüngenden Innenkonus 2K aufweist. Im Gehäuse 2 sind mindestens zwei schalenförmige Gewindemutter-Segmente 3-1, 3-2 angeordnet sind, deren Außen-Mäntel 3-1M, 3-2M jeweils eine dem Innenkonus 2K angepaßte Schräge aufweisen.
Die Gewindemutter-Segmente 3-1, 3-2 sind mit ihrem Außenmantel 3-1M, 3-2M auf dem Innenkonus 2K in Richtung der Gehäuseöffnung 2H oder entgegengesetzt dazu verschiebbar.
Die Gewindemutter-Segmente 3-1, 3-2 werden in Richtung der Gehäuseöffnung 2H von einer Spiral-Druckfeder 4 gedrückt.
Der Halte-Drehbolzen 1 kann zwischen die verschiebbaren Gewindemutter-Segmente 3-1, 3-2 gegen die Kraft der Feder 4 derart hineingedrückt werden, daß seine Gewindegänge 1W in die der Gewindemutter-Segmente 3-1, 3-2 einrasten. Je stärker er zwischen die Gewindemutter-Segmente gedrückt wird, um so mehr Gewindegänge rasten ineinander ein.
In Rastposition kann der Halte-Drehbolzen mit seinem Gewinde 1W durch Drehung mit dem Gewinde der Gewindemutter-Segmente 3-1, 3-2 verbunden werden. So kann die zunächst "lose" Rastverbindung in eine festere Gewindeverbindung überführt werden.
Ein Lösen der Verbindung geschieht durch "Aufschrauben" der Gewindeverbindung mittels Bolzendrehung.

Die Spiralfeder 4 ist zwischen dem Gehäuseboden 2B und einer in Richtung der Achse des Halte-Drehbolzens verschieblichen an den Gewindemutter-Segmenten 3-1, 3-2 anliegenden Scheibe 5 angeordnet.

Der Gehäuseboden 2B und die Scheibe 5 weisen jeweils eine Öffnung zur Führung des Halte-Drehbolzens 1 auf.
Das Gehäuse 1 hat einen nach außen abstehenden Rand 1-R oder nach außen abstehende Rand-Segmente.

Der Bolzenverbinder ist erfindungsgemäß in einem Schwingungsdämpferring 7 aus schwingungsdämpfenden Material, vorzugsweise aus Gummi oder Elastomer angeordnet.

Der Schwingungsdämpferring 7 ist an seinem Außenmantel mit der Innenwandung eines offenen Hohlzylinders 8 verbunden, welcher einen nach außen weisenden Träger-Rand 8-1 oder nach außen weisende Träger-Rand-Segmente aufweist.

Der Schwingungsdämpferring 7 bzw. der Hohlzylinder 8 mit dem Schwingungsdämpferring 7 sind in der Öffnung HMP2 des zweiten Bauteils MP2 angeordnet.

Dabei liegt das zweite Bauteil MP2 auf dem Trägerrand 8-1 oder den Träger-Rand-Segmenten des Hohlzylinders 8 auf oder ist mit diesem(diesen) verbunden.

Auf dem Trägerrand 8-1 oder den Trägerrand-Segmenten ist rutschhemmendes und/ oder schwingungsdämpfendes Material angeordnet oder als Schicht aufgebracht.
Auf der Oberseite des Bauteils MP2 im Randbereich seiner Bohrung HMP2 liegt ein Sicherungsring 6 auf. Dieser hat nach innen gerichtete Federnasen, welche kraftschlüssig mit dem Hohlzylinder verbunden sind.

Über der Öffnung 2H des Gehäuses ist ein Zentrierring 9 mit abgeschrägten Innenrand angeordnet ist. Er dient der Ausrichtung des Bolzens (1) auf die Achse des Bolzenverbinders.

Der Rand 1-R oder die Rand-Segmente reichen über die Projektion der Innen-Abmessung des Hohlzylinders 8 hinaus. Dadurch wirkt der untere Teil des Hohlzylinder 8 bei starker Deformation des Schwingungsdämpferringes als Anschlag für den Rand 1-R.

In der Öffnung HMP1 des ersten Bauteils MP1 ist eine Führungsbuchse 10 für den Halte-Drehbolzen 1 angeordnet. Diese hat einen auf dem ersten Bauteil MP1 aufliegenden Halterand 10-1 oder Halterand-Segmente, welche den unteren Öffnungsrand im Bauteil MP1 übergreifen.

### FIG. 2 zeigt

eine perspektische Darstellung eines Rast/Schraub-Verbinders für einen gedachten Gewindebolzen entsprechend dem Stand der Technik , bestehend aus einem hohlzylinderförmigen Gehäuse 2' mit zwei Gewindemuttersegmenten 3-1' und 3-2'.
Das Gehäuse 1 weist einen nach außen abstehenden Rand 1-R oder nach außen abstehende Rand-Segmente auf.

Der nach außen abstehenden Rand 1-R ist ein Montage-Flansch (1-R') zur Befestigung an einem Bauteil ausgeführt.

Im Innern des Gehäuses sind zwei Gewindemutter-Segmente 3-1' und 3-2' angeordnet: auf die Darstellung des Innenkonus und der Spiraldruckfeder etc. wurde aus Vereinfachungsgründen in FIG. 2 verzichtet.

### FIG.3 zeigt

eine Schnittdarstellung des Rast/Schraub-Verbinders gemäß FIG. 2 für eine horizontal verlaufende Schnittebene( mit Blickrichtung nach oben). Die Bezeichnungen für das Gehäuse , die beiden Gewindemutter-Segmente, die Abstandsräume und die Anschläge sind die gleichen wie in Abbildung FIG. 2.
Die Gewindemutter-Segmente 3-1', 3-2' sind voneinander beabstandet. In die Abstandsräume D1, D2 zwischen den Gewindemutter-Segmenten 3-1', 3-2' ragen von der Innenwandung des Gehäuses 2 ausgehende Anschläge S1', S2'. Diese dienen der Begrenzung der axialen Verdrehbarkeit der Gewindemutter-Segmente 3-1', 3-2'.

## Patentansprüche

1. Verbindungsanordnung zum lösbaren Verbinden zweier mit aufeinander ausgerichteten Öffnungen versehener Bauteile, bestehend aus
einem auf der Seite des ersten Bauteils in die Öffnungen einführbaren Halte-Drehbolzen und einem mit dem zweiten Bauteil verbundenen Bolzenverbinder,
**dadurch gekennzeichnet, daß**
in an sich bekannter Weise
der Halte-Drehbolzen (1) ein Außengewinde (1W) hat,
der Bolzenverbinder ein Gehäuse (2) aufweist mit einem sich zu seiner - der Aufnahme des Halte-Drehbolzen-Endes dienenden- Öffnung (2H) hin verjüngenden Innenkonus (2K) ,
in dem Gehäuse (2) mindestens zwei schalenförmige Gewindemutter-Segmente (3-1, 3-2) angeordnet sind, deren Außen-Mantel (3-1M, 3-2M) jeweils eine dem Innenkonus (2K) angepaßte Schräge aufweisen,
die Gewindemutter-Segmente (3-1, 3-2) mit ihrem Außenmantel (3-1M, 3-2M) auf dem Innenkonus (2K) in Richtung der Gehäuseöffnung (2H) oder entgegengesetzt dazu verschiebbar sind,
die Gewindemutter-Segmente (3-1, 3-2) in Richtung der Gehäuseöffnung (2H) feder(4)kraftbeaufschlagt sind,
der Halte-Drehbolzen (1) zwischen die verschiebbaren Gewindemutter-Segmente (3-1, 3-2) gegen die Feder(4)kraft derart eindrückbar ist, daß sein Gewinde (1W) in das der Gewindemutter-Segmente (3-1, 3-2) einrastbar ist, und
daß das Halte-Drehbolzen-Gewinde (1W) durch Drehung des Halte-Drehbolzens (1) mit dem Gewinde der Gewindemutter-Segmente (3-1, 3-2) gewindeverbindbar ist,
und daß dieser an sich bekannte Bolzenverbinder
in einem Schwingungsdämpferring (7) aus schwingungsdämpfenden Material, vorzugsweise aus Gummi oder Elastomer, angeordnet ist.

2. Anordnung nach Anspruch 1,
**dadurch gekennzeichnet, daß**
der Schwingungsdämpferring (7) mit der Innenwandung eines offenen Hohlzylinders (8) verbunden ist, welcher einen nach außen weisenden Träger-Rand (8-1) oder nach außen weisende Träger-Rand-Segmente aufweist.

3. Anordnung nach einem der Ansprüche 1 bis 2,
**dadurch gekennzeichnet, daß**
der Schwingungsdämpferring (7) oder der Hohlzylinder (8) in der Öffnung (HMP2) des zweiten Bauteils (MP2) anordnungsbar ist.

4. Anordnung nach Anspruch 3,
**dadurch gekennzeichnet, daß**
das zweite Bauteil (MP2) auf dem Trägerrand (8-1) oder den Träger-Rand-Segmenten des Hohlzylinders (8) aufliegt oder mit diesem (diesen) verbunden ist.

5. Anordnung nach einem der Ansprüche 2 bis 4,
**dadurch gekennzeichnet, daß**
auf dem Trägerrand (8-1) oder den Trägerrand-Segmenten rutschhemmendes und/ oder schwingungsdämpfendes Material angeordnet oder als Schicht aufgebracht ist.

6. Anordnung nach Anspruch 1,
**dadurch gekennzeichnet, daß**
das Gehäuse (1) einen nach außen stehenden Rand (1-R) oder nach außen stehende Rand-Segmente aufweist und daß der Rand (1-R) oder die Rand-Segmente über die Projektion der Innen-Abmessung des Hohlzylinders (8) hinausreichen.

7. Anordnung nach Anspruch 1,
**dadurch gekennzeichnet, daß**
über der Öffnung (2H) des Gehäuses ein Zentrierring (9) mit abgeschrägten Innenrand angeordnet ist.

8. Anordnung nach Anspruch 1,
**dadurch gekennzeichnet, daß**
in der Öffnung (HMP1) des ersten Bauteils (MP1) eine Führungsbuchse (10) für den Halte-Drehbolzen (1) angeordnet ist,
daß diese Führungsbuchse (10)
einen auf dem ersten Bauteil (MP1) aufliegenden Halterand (10-1),
sowie federnde Buchsen-Arme (10-2) aufweist, deren freie Enden Nasen (N) aufweisen, welche den unteren Öffnungsrand der Bohrung des ersten Bauteils übergreifen.

9. Lösbarer Verbinder für einen gedachten Gewindebolzen,
**gekennzeichnet**
**durch** einen an sich bekannten Bolzenverbinder ,
bestehend aus
einem Gehäuse (2) mit einem sich zu seiner - der Aufnahme des gedachten Gewindebolzen-Endes dienenden- Öffnung (H2) hin verjüngenden Innenkonus (2K),
aus mindestens zwei schalenförmigen in dem Gehäuse (2) angeordneten Gewindemutter-Segmenten (3-1, 3-2) , deren Außen-Mantel (3-1M, 3-2M) jeweils eine dem Innenkonus (2K) angepaßte Schräge aufweisen,
wobei die Gewindemutter-Segmente (3-1, 3-2) mit ihrem Außenmantel auf dem Innenkonus (2K) in Richtung der Gehäuseöffnung (H2) oder entgegengesetzt dazu verschiebbar sind,
und wobei die Gewindemutter-Segmente (3-1, 3-2) in Richtung der Gehäuseöffnung (H2) feder(4)kraftbeaufschlagt sind ,
und wobei der gedachte Gewinde-Bolzen (1) gegen die Feder(4) kraft zwischen die Gewindemutter-Segmente (3-1, 3-2) derart eindrückbar ist, daß sein Gewinde in das der Gewindemutter-Segmente (3-1, 3-2) einrastbar ist, und
wobei das Bolzen-Gewinde (1W) durch Drehung des gedachten Gewindebolzens (1) mit dem Gewinde der Gewindemutter-Segmente (3-1, 3-2) gewindeverbindbar ist
und **gekennzeichnet durch** einen Schwingungsdämpferring (7) , in welchem der an sich bekannte Bolzen-Verbinder angeordnet ist.

10. Anordnung nach Anspruch 9,
**dadurch gekennzeichnet, daß**
der Schwingungsdämpferring (7) mit der Innenwandung eines eines offenen Hohlzylinders (8) verbunden ist, welcher einen nach außen weisenden Träger-Rand (8-1) oder nach außen weisende Träger-Rand-Segmente aufweist.
